# EUROPÄISCHE PATENTANMELDUNG

(11) **EP 0 715 485 A1**
(43) Veröffentlichungstag der Anmeldung: **05.06.1996**
(21) Anmeldenummer: 95118611.3
(22) Anmeldetag: 27.11.1995
(51) Int. Cl.: H05B 6/02, F27B 9/06, F27B 9/04, F27D 11/06

(54) **Ofen zum Brennen von keramischen Formteilen**

(30) Priorität: 30.11.1994 DE 4442593
(71) Anmelder: DIDIER-WERKE AG, D-65189 Wiesbaden (DE)
(72) Erfinder: Brückner, Raimund, D-65527 Niedernhausen (DE); Grimm, Daniel, D-65307 Bad Schwalbach (DE); Ritter, Werner, D-95615 Marktredwitz (DE)
(74) Vertreter: Brückner, Raimund Dipl.-Ing.

(57) **Zusammenfassung**

Ein Ofen zum Brennen von keramischen Formteilen, die gegebenenfalls nach einer Vorerhitzung induktiv an ein elektromagnetisches Feld ankoppeln, soll bei einfachem Aufbau das Brennen der Formteile verbessern. Der Ofen weist eine Vorheizzone (5) und eine an diese anschließende Brennzone (6) auf. Die Vorheizzone (5) und gegebenenfalls die Brennzone (6) ist von einem Suszeptor (4) gebildet, der induktiv aufgeheizt Wärme an das Formteil (F) abgibt. Die Brennzone (6) und gegebenenfalls die Vorheizzone (5) ist von einem Induktor (2) gebildet, der das Formteil (F) induktiv auf Brenntemperatur bringt. Eine Fördereinrichtung bewegt entweder das Formteil (F) durch den Ofen oder den Ofen über das Formteil (F), wobei das Formteil (F) vom Suszeptor (4) zum Induktor (2) gelangt.

## Beschreibung

Die Erfindung betrifft einen Ofen zum insbesondere reduzierenden Brennen von keramischen Formteilen, die gegebenenfalls nach einer Vorerhitzung induktiv an ein elektromagnetisches Feld ankoppeln.

In der DE 36 40 213 C1 ist ein gasbeheizter Durchschubofen beschrieben. Bei solchen Durchschuböfen ist der Verlauf der Aufheizung schwer regelbar. Nachteilig ist bei gasbeheizten Öfen auch, daß ein Brennen in reduzierender Atmosphäre aufwendig ist. Nach dem Stand der Technik werden hierfür die Formteile in Koksgrus eingebettet, der aus den Verbrennungsabgasen oder einer sonstigen Zufuhr stammenden Sauerstoff aufnimmt.

Bekannte Durchschuböfen sind zum Brennen großer Losgrößen ausgelegt. Hiertür werden die Formteile mittels Brennhilfsmitteln auf einem Ofenwagen aufgebaut. Kleine Losgrößen zu brennen, ist unwirtschafflich.

In der DE 41 25 916 A1 ist ein Verfahren zum induktiven Aufheizen von keramischen Formteilen in einem Induktor beschrieben. Als Abwandlung ist vorgeschlagen, die Vorheizung des grünen Formteils in einem Mantel (Suszeptor) durchzuführen, der induktiv aufheizbar ist und der durch Konvektion und/oder Strahlung Wärme an das Formteil abgibt. Der Mantel wird danach entfernt, so daß das vorerhitzte Formteil an das Feld induktiv ankoppelt und gebrannt wird. Für einen Ofenaufbau ist dieses Verfahren unpraktisch, da es mehrere Relativbewegungen erforderlich macht; zum einen muß der Suszeptor relativ zum Induktor bewegt werden und zum anderen muß das Formteil wenigstens relativ zum Induktor bewegt werden.

Aufgabe der Erfindung ist es, einen Ofen vorzuschlagen, der bei einfachem Aufbau das Brennen von Formteilen verbessert.

Erfindungsgemäß weist der Ofen eine Vorheizzone und eine an diese in Ofenlängsrichtung anschließende Brennzone auf. Die Vorheizzone und gegebenenfalls die Brennzone ist von einem Suszeptor gebildet, der induktiv aufheizbar ist und der durch Konvektion und/oder Wärmestrahlung Wärme an das Formteil abgibt. Die Brennzone und gegebenenfalls die Vorheizzone ist von einem Induktor gebildet, der das Formteil induktiv auf Brenntemperatur bringt. Es ist eine Fördervorrichtung vorgesehen, die entweder das Formteil durch den Ofen oder den Ofen über das Formteil bewegt, wobei das Formteil vom Suszeptor in den Induktor gelangt.

Dieser Ofenaufbau führt zu einer gleichmäßigen und gut steuerbaren Aufheizung des Formteils sowohl im Suszeptor als auch im Induktor. Zwischen dem Suszeptor und dem Induktor ist das Formteil keinen großen Temperatursprüngen ausgesetzt. All dies verringert die Gefahr von Rißbildungen im Formteil.

Der Ofenaufbau läßt sich leicht an das jeweilige Format der zu brennenden Formteile anpassen. Es sind kein aufwendiges Aufstellen der Formteile und keine Brennhilfsmittel auf einem Durchschubwagen nötig. Da die Formteile einzeln direkt durch den Ofen geführt werden können, ist der Ofenbetrieb auch bei kleinen Losgrößen wirtschaftlich und flexibel an die jeweiligen Bedürfnisse anpaßbar.

Ein Brennen in reduzierender Atmosphäre ergibt sich leicht, da im Ofen keine Verbrennungs-Abgasströme aus Flammen auftreten. Die aus den Formteilen, insbesondere wegen Verbrennens ihres organischen Bindemittels, austretenden Gase wirken reduzierend. Im Ofen läßt sich auf einfache Weise ein geringer Überdruck aufrechterhalten, der ein Eintreten von Sauerstoff aus der Umgebung verhindert.

Es sind verschiedene Ausführungen möglich. In einer Ausführung ist die Vorheizzone als Suszeptor und die Brennzone als Induktor ausgebildet. Diese Ausführung eignet sich, wenn die zu tempernden keramischen Formteile aus harzgebundenen CGA oder Grasanit bestehen.

In einer zweiten Ausführung sind sowohl die Vorheizzone als auch die Brennzone als Induktor ausgebildet. Dieser Aufbau eignet sich, wenn Formteile aus Carbural oder kohlenstoffgebundenem SiC gebrannt werden.

Bei einer dritten Ausführung sind sowohl die Vorheizzone als auch die Brennzone als Suszeptor gestaltet. Es lassen sich in diesem Fall insbesondere Formteile aus SSiC, RSiC, SiSiC oder aus Werkstoffen mit Kohlenstoffgehalten kleiner als 5% brennen.

Vorteilhafte Ausgestaltungen der Erfindung ergeben sich aus den Unteransprüchen und der folgenden Beschreibung von Ausführungsbeispielen. In der Zeichnung zeigen:
- Figur 1: einen Durchschubofen schematisch, und
- Figur 2: einen Ofen mit vertikaler Bewegungsrichtung des Ofens oder des Formteils.

In ein Gehäuse (1) eines Ofens ist ein Induktor (2) eingebaut. Dieser kann aus einer oder mehreren Induktionsspulen bestehen. Durch die Verwendung mehrerer Induktionsspulen läßt sich die Leistungsabgabe in den einzelnen Bereichen in Durchschubrichtung steuern. In dem Gehäuse (1) ist nahe bei einer Einschuböffnung (3) ein Suszeptor (4) festgelegt. Der Suszeptor (4) bildet eine Vorheizzone (5). Er liegt innerhalb eines Teils des Induktors (2). Dieser Teil kann auch von einer eigenen, separat regelbaren Induktionsspule gebildet sein.

An die Vorheizzone (5) schließt sich innerhalb des Induktors (2) eine Brennzone (6) an. Diese endet bei einer Ausschuböffnung (7) des Gehäuses (1).

Der Suszeptor (4) besteht aus einem bei Raumtemperatur induktiv ankoppelbaren Material, beispielsweise aus einem feuerfesten keramischen Material, wie CSiC, CGA, Carbural, Graphit. Der Suszeptor (4) ist beispielsweise aus Platten oder Schalen oder aus einem oder mehreren Ringen aufgebaut.

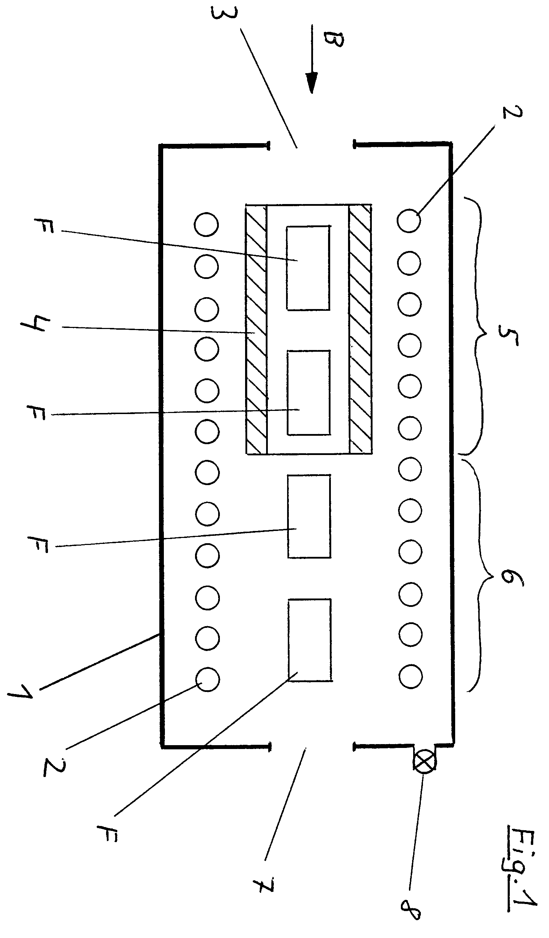

Bei der Ausführung nach Figur 1 ist eine nicht näher dargestellte Fördervorrichtung, beispielsweise eine Rollenbahn, vorgesehen, die sich in Längsrichtung durch das Gehäuse von der Einschuböffnung (3) bis zur Ausschuböffnung (7) erstreckt. Mittels der Fördervorrichtung werden die Formteile (F) in horizontaler Richtung (B) durch den Suszeptor (4), d.h. die Vorheizzone (5), und anschließend durch die Brennzone (6) bewegt.

Am Ofen ist ein Ventil (8) angeordnet, über das die aus den Formteilen austretenden Gase gezielt abgezogen werden können und über das im Gehäuse (1) ein geringer Überdruck gegenüber der Umgebung aufrechterhaltbar ist, so daß keine Umgebungsluft in das Gehäuse (1) eintritt.

Die Arbeitsweise des beschriebenen Ofens ist im wesentlichen folgende:
Die Formteile (F) werden im grünen Zustand in den Suszeptor (4) eingeschoben. Dieser ist induktiv aufgeheizt und gibt Wärme an die Formteile (F) ab. Diese werden dadurch vorgeheizt. Sind die Formteile (F) nicht von selbst schon bei Raumtemperatur induktiv an ein elektromagnetisches Feld ankoppelbar, dann werden sie im Suszeptor (4) auf eine solche Temperatur vorerhitzt, bei der sie induktiv ankoppelbar werden.

Die vorgeheizten Formteile (F) verlassen dann den Suszeptor (4) und treten in die Brennzone (6) ein. In dieser werden sie durch induktive Ankopplung vom Induktor (2) auf Brenntemperatur aufgeheizt. Durch bereichsweises Steuern der Leistungsabgabe des Induktors (2) läßt sich die Temperatur definiert erhöhen und nach Erreichen des Maximums absenken.

Bei der Erhitzung zersetzen sich organische Bestandteile, beispielsweise ein als Bindemittel verwendetes organisches Harz, der Formteile. Die dabei austretenden Gase bilden in der Vorheizzone (5) und der Brennzone (6) eine reduzierende Atmosphäre, was das Brennergebnis günstig beeinflußt. Entsteht nicht aus den Formteilen (F) eine reduzierende Atmosphäre, dann kann durch das Ventil (8) Inertgas in das Gehäuse (1) eingeleitet werden. Eine Inertgaseinleitung kann auch vorgesehen sein, um im Gehäuse (1) einen gewissen Überdruck zu erzeugen.

Nachdem die Formteile (F) in der Brennzone (6) der Brenntemperatur hinreichend lang ausgesetzt sind, werden sie durch die Ausschuböffnung (7) gefördert.

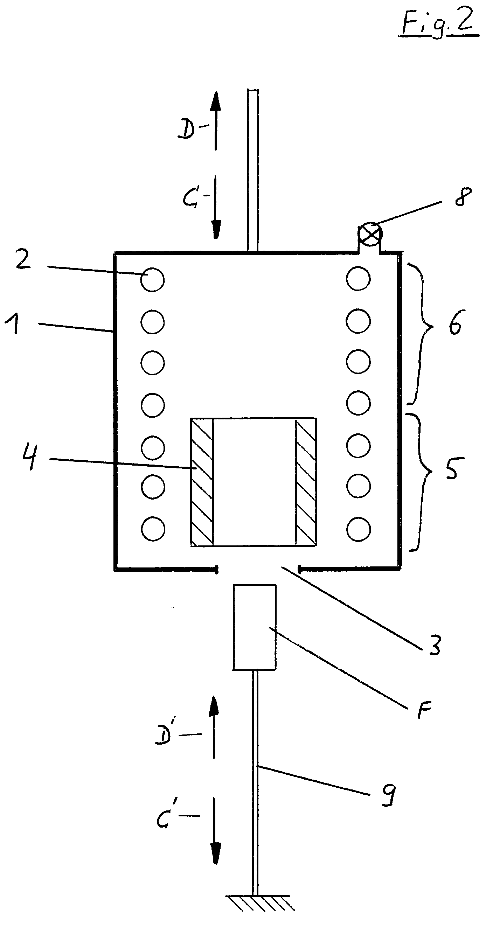

Bei dem Ofen nach Figur 1 ist ein kontinuierlicher Verfahrensablauf gegeben. Beim Ausführungsbeispiel nach Figur 2 erfolgt das Brennen diskontinuierlich.

Bei der Ausführung nach Figur 2 sind die Figur 1 gleichen Teile mit gleichen Bezugszeichen versehen. Das zu brennende Formteil (F), das hier insbesondere ein Rohr ist, ist stehend auf einem Ständer (9) angeordnet. Das Ofengehäuse (1) ist an einer Fördervorrichtung, beispielsweise einem Hebezeug, angeordnet, mit dem der Ofen in Richtung (C) vertikal über das Formteil (F) absenkbar und nach dem Brand in Richtung (D) vertikal anhebbar ist. In Umkehrung der Bewegungen ist es auch möglich, den Ofen fest zu installieren und den Ständer (1) mit dem Formteil (F) in vertikaler Richtung (D') in den Ofen einzuschieben und ihn nach dem Brand in Richung (C') aus dem Ofen abzusenken.

Die Arbeitsweise des Ofens nach Figur 2 ist im wesentlichen folgende:
Bei der Bewegung in Richtung (C bzw. D') kommt das Formteil (F) zunächst in den Suszeptor (4) und wird dort in der beschriebenen Weise vorgeheizt. Bei der weiteren Bewegung gelangt dann das Formteil (F) in die Brennzone(6) des Induktors (2) und wird nun, wie beschrieben, gebrannt. Danach wird das Formteil (F) aus dem Ofen entfernt, entweder dadurch, daß er in Richtung (D) oder es in Richtung (C') bewegt wird.

Auch bei dieser Ausführung kann der Induktor (2) so gestaltet sein, daß seine Leistung in Einschubrichtung bzw. Ausschubrichtung des Formteils (F) steuerbar ist.

## Patentansprüche

1. Ofen zum insbesondere reduzierenden Brennen von keramischen Formteilen, die gegebenenfalls nach einer Vorheizung induktiv an ein elektromagnetisches Feld ankoppeln,
dadurch gekennzeichnet,
daß der Ofen eine Vorheizzone (5) und eine an diese in Ofenlängsrichtung anschließende Brennzone (6) aufweist, daß die Vorheizzone (5) und gegebenenfalls die Brennzone (6) von einem Suszeptor (4) gebildet ist, der induktiv aufheizbar ist und der durch Konvektion und/oder Wärmestrahlung Wärme an das Formteil (F) abgibt, oder daß die Brennzone (6) und gegebenenfalls die Vorheizzone (5) von einem Induktor (2) gebildet ist, der das Formteil (F) induktiv auf Brenntemperatur bringt, und daß eine Fördereinrichtung vorgesehen ist, die entweder das Formteil (F) durch den Ofen oder den Ofen über das Formteil (F) bewegt, wobei das Formteil (F) vom Suszeptor (4) in den Induktor (2) gelangt.

2. Ofen nach Anspruch 1,
dadurch gekennzeichnet,
daß der Suszeptor (4) aus feuerfestem keramischem Material besteht, das bei Raumtemperatur induktiv ankoppelt.

3. Ofen nach Anspruch 1 oder 2,
dadurch gekennzeichnet,
daß die Leistungsabgabe des Induktors (2) in der Brennzone (6) Und des Induktors (2) in der Vorheizzone (5) in Ofenlängsrichtung steuerbar ist.

4. Ofen nach einem der vorhergehenden Ansprüche,
dadurch gekennzeichnet,
daß der Suszeptor (4) in einem eigenen Induktor angeordnet ist, und daß dieser in seiner Leistungsabgabe in Ofenlängsrichtung steuerbar ist.

5. Ofen nach einem der vorhergehenden Ansprüche 1 bis 3,
dadurch gekennzeichnet,
daß der Suszeptor (4) in einer Verlängerung des Induktors (2) der Brennzone (6) angeordnet ist.

6. Ofen nach einem der vorhergehenden Ansprüche,
dadurch gekennzeichnet,
daß im Ofen eine Inertgasatmosphäre oder eine reduzierende Atmosphäre besteht.

7. Ofen nach Anspruch 6,
dadurch gekennzeichnet,
daß die reduzierende Atmosphäre durch die thermische Zersetzung organischer Bestandteile des Formteils (F) entsteht.

8. Ofen nach einem der vorhergehenden Ansprüche,
dadurch gekennzeichnet,
daß im Ofen ein Überdruck besteht.
